Europäisches Patentamt

European Patent Office

Office européen des brevets

(19)

(11) Veröffentlichungsnummer: **0 040 734**
**B1**

(12) **EUROPÄISCHE PATENTSCHRIFT**

(45) Veröffentlichungstag der Patentschrift:
11.01.84

(51) Int. Cl.³: **H 02 K 9/20**, H 02 K 55/04

(21) Anmeldenummer: 81103525.2

(22) Anmeldetag: 08.05.81

(54) Einrichtung zur Kühlung einer supraleitenden Erregerwicklung und eines Dämpferschildes des Läufers einer elektrischen Maschine.

(30) Priorität: 22.05.80 DE 3019673

(43) Veröffentlichungstag der Anmeldung:
02.12.81 Patentblatt 81/48

(45) Bekanntmachung des Hinweises auf die Patenterteilung:
11.01.84 Patentblatt 84/2

(84) Benannte Vertragsstaaten:
CH FR GB LI

(56) Entgegenhaltungen:
DE - A - 2 742 477
DE - A - 2 843 129
FR - A - 2 290 777
US - A - 3 618 337
US - A - 4 082 967

ADVANCES IN CRYOGENIC ENGINEERING, Band 25,
1980, Plenum Press Proceedings of the 1979 Cryogenic
Engineering Conference, Madison, Wisconsin, U.S.A.,
21-24 August'79 NEW YORK (US) M.T. BROWN et al.:
"Rotor cooling system for a 10MVA superconducting
generator" Seiten 285-293

(73) Patentinhaber: SIEMENS AKTIENGESELLSCHAFT,
Berlin und München Wittelsbacherplatz 2,
D-8000 München 2 (DE)

(72) Erfinder: Weghaupt, Erich, Rathenaustrasse 10,
D-4330 Mülheim/Ruhr (DE)
Erfinder: Intichar, Lutz, Dr., Max-Busch-Strasse 12,
D-8520 Erlangen (DE)
Erfinder: Schnapper, Christoph, Dr., Lachnerstrasse 63,
D-8520 Erlangen (DE)

## Einrichtung zur Kühlung einer supraleitenden Erregerwicklung und eines Dämpferschildes des Läufers einer elektrischen Maschine

Die Erfindung bezieht sich auf eine Einrichtung zur Kühlung einer supraleitenden Erregerwicklung im Läufer einer elektrischen Maschine, insbesondere eines Turbogenerators, mit mindestens einem Kühlmittelraum, der im Betriebszustand eine dampfförmige und eine flüssige Phase eines an einem Anschlußkopf in mindestens eine mit dem Kühlmittelraum verbundene, mitrotierende Zuführungsleitung mit unterkritischem Druck eingeleiteten kryogenen Kühlmittels enthält, mit durch die Erregerwicklung verlaufenden Kühlmittelwegen, die mit dem von der flüssigen Phase eingenommenen Flüssigkeitsraum des Kühlmittelraumes verbunden sind, mit mindestens einer Kühlmittelabführungsleitung, die an den von der gasförmigen Phase eingenommenen Dampfraum des Kühlmittelraumes angeschlossen ist, und mit mindestens einer flüssiges Kühlmittel enthaltenden Kühlmittelvorratskammer sowie mit mindestens einem weiteren, schleifenartig verlaufenden Kühlmittelweg, der mit einem um die Erregerwicklung angeordneten Dämpferschild thermisch verbunden und der an seinem Anfang und Ende an die Kühlmittelvorratskammer angeschlossen ist. Eine derartige Kühleinrichtung ist aus dem Bericht von M. T. Brown et al. mit dem Titel »Rotor Cooling System for a 10 MVA Superconducting Generator« aus: Proceedings of the 1979 Cryogenic Engineering Conference, Madison (Wisconsin), USA, 21.–24. 8. 1979, Paper IC 9, bekannt.

Die supraleitende Erregerwicklung eines Generators muß während des Betriebs der Maschine auf so tiefer Temperatur gehalten werden, daß ihre Supraleiter nicht in den normalleitenden Zustand übergehen. Im allgemeinen ist deshalb eine Kühlung der Wicklung mit flüssigem Helium als kryogenem Kühlmittel vorgesehen, wobei die in den Supraleitern entstehende Verlustwärme und die von außen über drehmomentübertragende Teile des Läuferkörpers eingeleitete Wärme zu einem teilweisen Verdampfen des Kühlmittels führen. Der in den Tieftemperaturbereich des Läufers eingeleitete Wärmestrom kann jedoch nach dem Prinzip einer Gegenstromkühlung stark vermindert werden, wenn das verdampfte, aber noch kalte Kühlmittelabgas in gutem Wärmekontakt an den drehmomentübertragenden Läuferteilen entlanggeführt wird, dort einen großen Teil der einströmenden Wärme aufnimmt, sich dabei erwärmt und als warmes Gas den Läufer an einem Anschlußkopf verläßt.

In der supraleitenden Erregerwicklung selbst entsteht unter anderem Verlustwärme, wenn die Supraleiter einem magnetischen Wechselfeld ausgesetzt werden. Im Läufer eines Generators tritt dies z. B. dann auf, wenn bei Schieflast nicht alle Stromphasen der Ständerwicklung gleichmäßig belastet sind, ferner nach einer Kurzschlußfortschaltung oder bei Pendelungen, bei denen die Läuferdrehzahl vorübergehend mit der vorbestimmten Netzfrequenz nicht völlig übereinstimmt. Um in solchen transienten Betriebszuständen die Wechselfeldamplituden an den Supraleitern kleinzuhalten, kann die Erregerwicklung von einem oder mehreren Dämpferschilden umgeben werden, die das Magnetfeld abschirmen und gleichzeitig Pendelungen dämpfen. Zur Abschirmung von niederfrequenten Feldern sind auf tiefer Temperatur gehaltene Dämpferschilde aus thermisch und elektrisch gut leitendem Material günstig. In einem Dämpferschild entsteht nämlich beim stationären Generatorbetrieb praktisch keine Verlustwärme. Nur während der verhältnismäßig kurzen transienten Betriebsfälle, insbesondere bei Pendelungen, wird vorübergehend eine sehr große Verlustwärme frei. Dabei darf, im Gegensatz zu den Supraleitern der Erregerwicklung, deren Temperatur auch während der transienten Betriebsfälle unter der Sprungtemperatur ihres supraleitenden Materials bleiben muß, die Temperatur des kalten Dämpferschildes stärker anwachsen, beispielsweise auf 20 bis 30 Kelvin.

Ein Turbogenerator mit einer von einem solchen Dämpferschild umgebenden supraleitenden Erregerwicklung ist aus dem Bericht des Electric Power Research Institute, USA: »EPRI EL-577, Project 429-1, Final Report«, November 1977, Seiten 3-258 bis 3-270 bekannt. Bei der Kühlung der Erregerwicklung wird ein sogenannter Selbstpump-Effekt ausgenutzt, wie er z. B. beschrieben ist in der Dissertation von A. Bejan: »Improved thermal Design of the Cryogenic Cooling System for a Superconducting Synchronous Generator«, Ph. D.-Thesis, Massachusetts Institute of Technology (USA), Dezember 1974, Seiten 148 bis 159. Der Dämpferschild der aus dem EPRI-Bericht bekannten Maschine ist auf einem Tragzylinder des Läuferkörpers befestigt, in dem einzelne Kanäle vorhanden sind, welche als Dämpferkühlkanäle dienen. Zu dieser indirekten Kühlung des Dämpferschildes ist flüssiges Helium vorgesehen, das in diesen Kanälen aufgrund einer sogenannten Thermosiphonwirkung strömt: In dem kalten Dämpferschild erzeugte Wärme durchdringt den Tragzylinder, gelangt in das in seinen Kühlkanälen befindliche Helium und facht dort eine Konvektion an. Aufgrund dieser Konvektion fließt das erwärmte Helium in ein im Zentrum des Läufers vorhandenes Heliumbad zurück, wo eine entsprechende Menge an flüssigem Helium verdampft.

Bei dieser bekannten Kühleinrichtung ist gewährleistet, daß die Wärme aus dem kalten Dämpferschild nicht direkt in den Bereich der supraleitenden Erregerwicklung gelangt, da die Dämpferkühlkanäle von den Wicklungskühlkanälen thermisch isoliert sind. Außerdem ermöglicht ein guter Wärmeübergang von dem Tragzylinder in das in seinen Kühlkanälen befindliche Helium eine rasche Dämpferkühlung. Bei dieser Kühleinrichtung ist jedoch eine Abführung des entstehenden gasförmigen Heliums durch Abgasleitungen mit verhältnismäßig kleinem Strömungsquerschnitt vorgesehen, die an den drehmomentübertragenden Teilen des Läuferkörpers verlaufen. Ein in einem Störungsfall plötzlich auftretender großer Heliumdampfstrom kann dann aber den Läufer durch diese Abgasleitungen nicht schnell genug verlassen, so daß der Druck in dem zentralen Heliumbad entsprechend ansteigt. Die Folge davon ist auch ein Ansteigen der Sättigungstemperatur des zur Kühlung der supraleitenden Erregerwicklung verwendeten Heliums dieses Bades und damit der Temperatur der Wicklung selbst.

Diese Schwierigkeiten sind bei der eingangs genannten, aus dem Bericht aus »Proceedings of the 1979 Cryogenic Engineering Conference« bekannten Kühleinrichtung für einen entsprechenden Turbogenerator weitgehend vermieden. Bei dieser Kühleinrichtung sind nämlich die Kühlung zweier Dämpferschilde und die Wicklungskühlung weitgehend voneinander getrennt. Dementsprechend ist neben einem zentralen Kühlmittelraum zur Aufnahme des zur Kühlung der supraleitenden Erregerwicklung erforderlichen Kühlmittels noch eine besondere Kühlmittelvorratskammer vorgesehen, in der das zur Kühlung der Dämpferschilde erforderliche flüssige Helium gespeichert wird. Außerdem ist in dem Kühlmittelkreislauf zur Dämpferschildkühlung ein Phasenseparator zur Abtrennung von gasförmigen Heliumanteilen vorgesehen. Wenn nun in den Dämpferschilden plötzlich Wärme frei wird, bildet sich aufgrund einer Thermosiphon-Wirkung ein Kühlmittelkreislauf von dem in der Kühlmittelvorratskammer vorhandenen Helium-Bad durch den ersten Dämpferschild zu dem Phasenseparator und durch den zweiten Dämpferschild zurück zu dem Helium-Bad aus. Durch die Wärmezufuhr entsteht dabei in dem Helium-Bad der Kühlmittelvorratskammer und in dem Phasenseparator Heliumdampf, der durch besondere Gasaustrittsöffnungen und ferner durch einen in dem Separator vorhandenen Notausgang entweichen kann. Ein Rückflußventil in der Verbindung zwischen der Kühlmittelvorratskammer und dem das Kühlmittelbad für die Wicklung enthaltenden Kühlmittelraum verhindert dabei, daß der Druckanstieg in der Kühlmittelvorratskammer auf das Kühlmittelbad der Wicklung zurückwirken kann. Über dieses Ventil ist ferner ermöglicht, daß die Kühlmittelvorratskammer mit flüssigem Helium gefüllt wird. Bei dieser Kühleinrichtung besteht aber die Schwierigkeit, daß der Heliumdampf, der in dem Kühlmittelbad der Wicklung gebildet wird, so lange nicht entweichen kann, wie das Rückflußventil der Kühlmittelvorratskammer geschlossen ist. Dann kann aber der Druck und damit die Temperatur des für die Kühlung der Erregerwicklung vorgesehenen Kühlmittels ansteigen. Außerdem ist ein einwandfreies Arbeiten des Rückflußventils mit seinen beweglichen Teilen bei Tieftemperatur nur mit verhältnismäßig großem Aufwand zu gewährleisten.

Aufgabe der vorliegenden Erfindung ist es deshalb, die Kühleinrichtung der eingangs genannten Art zu vereinfachen und dahingehend zu verbessern, daß eine Abführung von aufgrund von Verlusten in dem Dämpferschild hervorgerufenem Kühlmitteldampf aus dem Läufer erleichtert wird, ohne daß damit eine wesentliche Erwärmung des für die Kühlung der Erregerwicklung vorzusehenden flüssigen Kühlmittels verbunden ist.

Diese Aufgabe wird erfindungsgemäß dadurch gelöst, daß die Kühlmittelvorratskammer über eine radial verlaufende Verbindungsleitung direkt an die Kühlmittelzuführungsleitung angeschlossen ist und daß zu einer Abführung von gasförmigen Kühlmittelanteilen aus der Kühlmittelvorratskammer zu dem Anschlußkopf hin der Strömungsquerschnitt der radial verlaufenden Verbindungsleitung sowie der Strömungsquerschnitt zumindest des zwischen dem Anschlußkopf und der Anschlußstelle der radialen Verbindungsleitung verlaufenden Teilstücks der Kühlmittelzuführungsleitung entsprechend groß bemessen sind.

Die Vorteile dieser Gestaltung der Kühleinrichtung bestehen zum einen darin, daß schon vorhandene Kühlmittelleitungen zum Einleiten des für den Kreislauf zur Kühlung des Dämpferschildes erforderlichen Kühlmittels in den Läufer und auch zur Abführung dieses Kühlmittels verwendet werden. Für das Dämpferkühlmittel sind somit besondere und konstruktiv aufwendige Kupplungsteile zwischen rotierenden und feststehenden Maschinenteilen an dem Anschlußkopf des Läufers nicht erforderlich. Durch die ausreichend große Bemessung der Strömungsquerschnitte der das Kühlmittelabgas des Dämpfungskreislaufs führenden Leitungsteile ist zugleich gewährleistet, daß bei einem transienten Betriebsfall der Maschine auftretende größere Abgasmengen ohne weiteres aus dem Läufer ausgeleitet werden können. Zum anderen ist bei dieser Kühleinrichtung eine Kühlung des Dämpferschildes ermöglicht, die im wesentlichen unabhängig von dem Kühlsystem zur Kühlung der supraleitenden Erregerwicklung erfolgt. Bei Temperaturerhöhungen in dem Kühlkreislauf des Dämpferschildes ist deshalb ein über das Kühlmittel bewirkter Wärmetransport zu den Leitern der Erregerwicklung weitgehend ausgeschlossen.

Gemäß einer Weiterbildung der Kühleinrichtung nach der Erfindung umfaßt der Kühlmittelweg des Dämpferschildes mindestens ein Paar paralleler, im wesentlichen axial verlaufender Kühlmittelleitungen, die an der von der zugeordneten Kühlmittelvorratskammer am weitesten entfernten Stelle miteinander verbunden sind. Dabei liegt vorteilhaft eine Kühlmittelleitung jedes Leitungspaares radial weiter außen, während die andere Kühlmittelleitung radial weiter innen angeordnet ist. Auf diese Weise wird eine sehr wirksame Kühlmittelströmung durch die Kühlmittelleitungen aufgrund einer Thermosiphon-Wirkung ermöglicht.

Andere vorteilhafte Ausgestaltungen der Kühleinrichtung nach der Erfindung gehen aus den restlichen Unteransprüchen hervor.

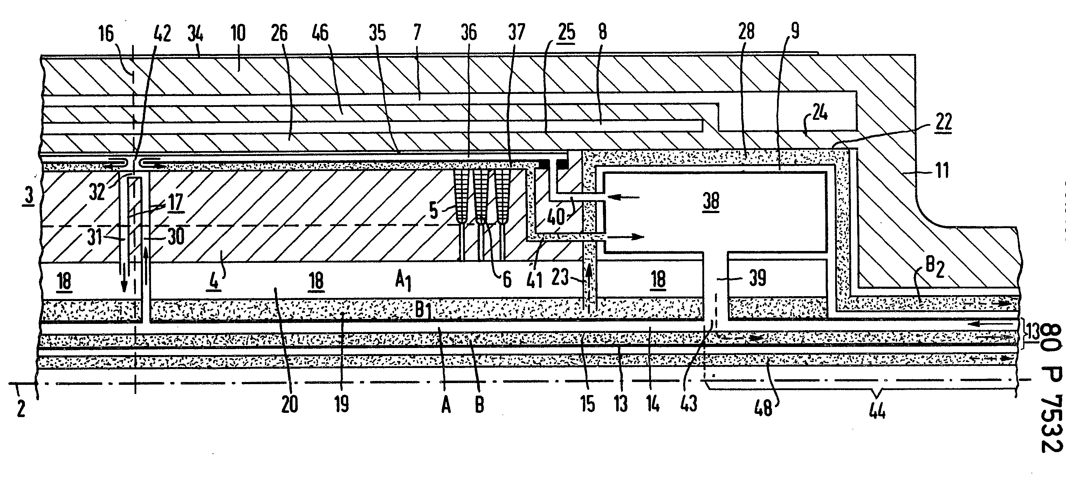

Zur weiteren Erläuterung der Erfindung und deren in den Unteransprüchen gekennzeichneten Weiterbildungen wird auf die Zeichnung Bezug genommen, in deren Figur schematisch ein Längsschnitt durch einen Läufer mit einer Kühleinrichtung gemäß der Erfindung veranschaulicht ist.

In der Figur ist die Führung eines Kühlmittels nur durch einen an einen Anschlußkopf angrenzenden Teil des Läufers einer elektrischen Maschine, insbesondere eines Turbogenerators, angedeutet. Die in der Figur nicht näher ausgeführten Läuferteile können beispielsweise Teilen einer Maschine entsprechen, die aus der DE-OS 2 439 719 bekannt ist. Aus der Figur ist nur ein Teil der oberen Hälfte des Läufers mit einer Kühleinrichtung nach der Erfindung ersichtlich.

Ein um eine Achse 2 drehbar gelagerter Läuferkörper 3 der Maschine enthält einen Wicklungsträger 4, der mit Nuten 5 versehen ist, in welche die Leiter einer supraleitenden Erregerwicklung 6 eingebracht sind. In der Figur sind nur einige der Nuten mit den in ihnen angeordneten Wicklungsteilen ausgeführt. Die Leiter der Wicklung 6 enthalten supraleitendes Material; als kryogenes Kühlmittel ist flüssiges Helium vorgesehen. Zur thermischen Isolation der tiefzukühlenden Wicklung nach außen hin ist diese von in dem Läuferkörper 3 vorhandenen Vakuumräumen 7, 8, 9 umgeben, die sich innerhalb eines hohlzylindrischen Außenteils 10 und stirnseitigen, sich im wesentlichen radial erstreckenden Teilen 11 des Läuferkörpers 3 befinden. Die Läuferteile 10 und 11 liegen dabei im allgemeinen auf etwa Raumtemperatur.

Das zur Kühlung erforderliche Helium wird bei unterkritischem Druck, d. h. zum Beispiel im normalsiedenden Zustand bei Normaldruck oder einem geringen Überdruck von beispielsweise $1,1 \cdot 10^5$ Pa und bei einer Temperatur von etwa 4,4 K einer in der Figur nicht dargestellten Kühlmittelversorgungseinrichtung entnommen und über eine Heliumkupplung an einem nicht näher ausgeführten Anschlußkopf in den Läufer eingeleitet. Mit Hilfe einer solchen Heliumkupplung, die beispielsweise aus der Veröffentlichung »Siemens Forschungs- und Entwicklungsberichte«, Band 5 (1976), Nr. 1, Seite 13 bekannt ist, wird dabei das Kühlmittel von feststehenden auf rotierende Maschinenteile überführt. Das Kühlmittel gelangt so in eine sich im Inneren des Läuferkörpers in axialer Richtung erstreckende, mitrotierende Zuführungsleitung 13. Diese Zuführungsleitung ist ein zur Achse 2 konzentrisches Doppelrohr mit im Querschnitt ringförmigem Kühlmittelführungsraum. Sie kann beispielsweise aber auch aus mehreren Einzelrohren bestehen, die gemeinsam auf dem Mantel eines Zylinders liegen, oder ein einfaches, zentrisch angeordnetes Rohr sein, falls im Zentrum keine anderen Leitungen benötigt werden.

Da ein Teil des Kühlmittels bei der Zuführung in den Läuferkörper verdampft, lagert sich innerhalb der Zuführungsleitung 13 unter Einwirkung der Zentrifugalkraft ein mit A bezeichneter flüssiger Anteil des Kühlmittels in einem radial außen liegenden Bereich 14 und ein gasförmiger Anteil B in dem der Läuferachse 2 zugewandten Bereich 15 der Zuführungsleitung 13 an.

Das zur Kühlung der Erregerwicklung 6 erforderliche flüssige Helium wird aus dem den flüssigen Anteil A enthaltenden Bereich 14 der Zuführungsleitung 13 beispielsweise etwa in der durch eine gestrichelte Linie 16 angedeuteten Läufermitte entnommen und über eine Kühlmitteleinspeisungsleitung 17 zunächst in einen konzentrisch um die Zuführungsleitung 13 angeordneten Kühlmittelraum 18 überführt.

Zur Kühlung der supraleitenden Erregerwicklung ist vorteilhaft ein Kreislauf vorgesehen, in dem der bekannte Selbstpump-Effekt ausgenutzt wird. Ein entsprechender Kühlkreislauf ist z. B. bei der aus der DE-OS 2 830 887 bekannten Kühleinrichtung vorgesehen.

Aufgrund einer Wärmeeinleitung von außen und auch durch die in den Wicklungsteilen der Erregerwicklung 6 entstehenden Verlustleistungen verdampfen Anteile des zur Kühlung der Erregerwicklung vorgesehenen Kühlmittels. Diese Anteile lagern sich in einem achsnahen, als Dampfraum bezeichneten Bereich 19 des Kühlmittelraumes 18 an. Somit befindet sich im Betriebszustand in dem Raum 18 ein Zweiphasengemisch von flüssigem Kühlmittel $A_1$ und gasförmigem Kühlmittel $B_1$. Bei Rotation erfolgt unter Einfluß zentrifugaler Kräfte eine Phasentrennung, so daß sich das schwerere flüssige Kühlmittel $A_1$ in einem Flüssigkeitsraum 20 konzentrisch um das in dem der Läuferachse 2 zugewandten Bereich 19 gehaltene gasförmige Kühlmittel $B_1$ anlagert.

Der in dem Kühlmittelraum 18 vorhandene Kühlmitteldampf $B_1$ wird über eine besonders gestaltete Abgasleitung 22 nach außen abgeleitet. Auch hierbei wird ein Selbstpump-Effekt zum Absaugen des gasförmigen Kühlmittels ausgenutzt. Das an einer achsnahen Stelle des Dampfraumes 19 über ein radial verlaufendes Rohr 23 entnommene Kühlmittelgas wird nämlich aufgewärmt, indem es zu einer Gegenstromkühlung eines drehmomentübertragenden Verbindungsstücks 24 des Läuferkörpers 3 herangezogen wird. Dieses Verbindungsstück 24 ist das stirnseitige Endstück eines hohlzylinderförmigen Trägerkörperteils 25 des Läuferkörpers 3 und erstreckt sich zwischen einem kalten Mittelstück 26 dieses Trägerkörperteils und dem warmen Seitenteil 11 des Läuferkörpers. Die Abgasleitung 22 enthält ferner ein axial verlaufendes, mit dem achsfernen Verbindungsstück 24 thermisch verbundenes Leitungsteil 28, das als Wärmetauscher wirkt. Das so aufgewärmte und mit $B_2$ bezeichnete Kühlmittelabgas wird dann in Achsnähe zurückgeführt und an dem in der Figur nicht näher ausgeführten Anschlußkopf aus dem Läufer ausgeleitet und einer Kältemaschine zugeführt. Aufgrund des Selbstpump-Effektes zum Abpumpen des Kühlmittelabgases stellt sich dann vorteilhaft ein Unterdruck in dem Abgasrohr 23 und somit in dem Kühlmittelraum 18 ein, der z. B. unter 10⁵ Pa liegt.

Da sich das Kühlmittel in der Zuführungsleitung 13 unter Normaldruck oder geringem Überdruck befindet, in dem Kühlmittelraum 18 jedoch ein Unterdruck herrscht, muß ein Druckausgleich zwischen diesen beiden Räumen erfolgen. Der Druckausgleich wird in bekannter Weise aufgrund der besonderen Gestaltung der Kühlmitteleinspeisungsleitung 17 als Druckausgleichsleitung erreicht (vgl. z. B. »Cryogenics«, 1977, Seiten 429 bis 433). Dementsprechend enthält die Kühlmitteleinspeisungsleitung 17 ein an die Zuführungsleitung 13 angeschlossenes, radial nach außen führendes, rohrförmiges Leitungsteil 30, an dessen äußerem Ende ein radial nach innen führendes, in den Kühlmittelraum 18 mündendes rohrförmiges Leitungsteil 31 angeschlossen ist. Es kann so erreicht werden, daß an der achsfernen Verbindungsstelle 32 zwischen den rohrförmigen Leitungsteilen 30 und 31 Druckgleichgewicht herrscht, da die beiden Heliumsäulen in diesen Leitungsteilen wegen unterschiedlicher Drücke unterschiedliche Temperaturen und damit Dichten aufweisen. Ein Absenken des Spiegels in dem Kühlmittelraum 18 zu größerem Radius hin bewirkt außerdem ein Druckungleichgewicht an der Verbindungsstelle 32. Es kann dann Helium über die Einspeisungsleitung 17 so lange nachfließen, bis sich wieder die Gleichgewichtsbedingung zwischen den Drücken einstellt.

Zur Begrenzung der Wechselfeldamplituden an den supraleitenden Leitern der Erregerwicklung 6, beispielsweise im Falle eines Stoßkurzschlusses oder bei Pendelungen, ist die Erregerwicklung von zwei mitrotierenden Dämpferschilden 34 und 35 konzentrisch umgeben. Der Dämpferschild 34 ist dabei auf der Außenseite des hohlzylindrischen Außenteils 10 des Läuferkörpers 3 angebracht und befindet sich auf Raumtemperatur, während der Dämpferschild 35 auf der Innenseite des hohlzylinderförmigen Trägerkörperteils 25 angeordnet ist und auf Tieftemperatur gekühlt wird. In diesem Schild 35, der vorteilhaft aus einem Material sehr guter thermischer und elektrischer Leitfähigkeit wie z. B. Kupfer besteht, entsteht bei stationärem Generatorbetrieb praktisch keine Verlustwärme. Nur während der verhältnismäßig kurzen transienten Betriebsfälle wird in ihm vorübergehend eine sehr große Verlustwärmemenge frei.

Das zur Kühlung des inneren Dämpferschildes 35 erforderliche Kühlsystem ist vorteilhaft weitgehend getrennt von dem System zur Kühlung der Erregerwicklung 6. Dieses Dämpferkühlsystem enthält ein oder mehrere Paare von axial verlaufenden Dämpferkühlkanälen 36 und 37, mindestens eine Kühlmittelvorratskammer 38 und mindestens eine radial verlaufende, rohrförmige Verbindungsleitung 39. Nur über diese Verbindungsleitung ist die Kühlmittelvorratskammer 38 mit der Heliumzuführungsleitung 13 und damit mit dem Kühlsystem der Erregerwicklung 6 verbunden. Jedes Paar von Dämpferkühlkanälen 36 und 37 ist über zwei Anschlußleitungen 40 und 41 mit der Kühlmittelvorratskammer 38 verbunden, wobei die Anschlußleitung 40 radial weiter außen und die Anschlußleitung 41 radial weiter innen in die Kammer 38 münden. Vorteilhaft sind auch die beiden Kühlkanäle eines Kühlkanalpaares nicht im gleichen Abstand bezüglich der Läuferachse 2 angebracht, sondern liegt der Dämpferkühlkanal 36 auf größerem Radius bzgl. der Achse 2 als der Kühlkanal 37.

Die beiden Kühlkanäle 36 und 37 eines Kühlkanalpaares sind an einer von der ihnen zugeordneten Kühlmittelvorratskammer 38 am weitesten entfernten Stelle 42 auch untereinander verbunden. Diese Verbindungsstelle befindet sich gemäß dem Ausführungsbeispiel nach der Figur in der durch die gestrichelte Linie 16 angedeuteten Läufermitte, da angenommen ist, daß auch an dem in der Figur nicht ausgeführten Läuferteil ein entsprechender Kühlkreislauf für den kalten Dämpferschild vorgesehen ist. Es wird so eine Strömung des zur Kühlung des Dämpferschildes 35 vorgesehenen Kühlmittels in einem geschlossenen Kreislauf ermöglicht. Dabei bildet jedes Kühlkanalpaar zusammen mit den Anschlußleitungen 40 und 41 eine Thermosiphon-Schleife. Durch die im Dämpferschild 35 frei werdende Wärme erfährt nämlich das Helium in den Kühlkanälen 36 und 37 und den Anschlußleitungen 40 und 41 einen Auftrieb zur Läuferachse 2 hin. Dadurch bildet sich eine Strömung aus: Kälteres, spezifisch schwereres Helium fließt aus der Kühlmittelvorratskammer 38 zum Dämpferschild 35, während wärmeres, spezifisch leichteres Helium in die Vorratskammer zurückgelangt. Hier strebt das erwärmte Helium zur Läuferachse 2 hin und gelangt über die radiale Verbindungsleitung 39 an einer Anschlußstelle 43 in die Heliumzuführungsleitung 13. Ein Teil des Heliums verdampft hier und verläßt im achsnahen Gasraum 15 dieser Zuführungsleitung den Läufer.

Im Verlauf eines transienten Betriebsfalles, insbesondere bei einem Pendelvorgang, verdampft ein großer Teil des in der Heliumvorratskammer 38 vorhandenen Kühlmittels. Eine Abführung der anfallenden Gasmengen läßt sich vorteilhaft dadurch gewährleisten, daß der Strömungsquerschnitt der rohrförmigen Verbindungsleitung 39 und zumindest das zwischen dem Anschlußkopf und der Einmündungsstelle 43 der Verbindungsleitung 39 sich erstreckenden Teilstückes 44 der Heliumzuführungsleitung 13 ausreichend groß bemessen sind. Nach dem Störungsfall wird dann die Kühlmittelvorratskammer 38 wieder mit flüssigem, einer externen Kühlmittelversorgungseinheit entnommenem Helium aufgefüllt.

Bei dieser Kühleinrichtung ist eine Beeinträchtigung der Wicklungskühlung durch die Dämpferkühlung weitgehend ausgeschlossen. Da die axiale Heliumzuleitung 13 genügend groß dimensioniert ist, kann durch ihren Gasraum 15 eine plötzlich anfallende Heliumdampfmenge ohne großen Druckanstieg aus dem Läufer entweichen. Ein geringer Druckanstieg in der axialen Zuführungsleitung 13 hat höchstens zur Folge, daß die in Zuführungsleitung befindliche verhältnismäßig kleine Menge an flüssigem Helium A über die Einspeisungsleitung 17 in den Kühlmittelraum 18 gepumpt wird. Heliumdampf kann aber nicht aus der Zuführungsleitung 13 in diesen Kühlmittelraum 18 gelangen, da die Flüssigkeit in den radialen Kanälen 30 und 31 der Einspeisungsleitung 17 als Sperre wirkt: Dem Gasdruck in der axialen Zuführungsleitung 13 und der radialen Zulaufleitung 30 wirkt nämlich der durch die Zentrifugalkraft hervorgerufene Druck der Flüssigkeitssäule in der anderen radialen Zulaufleitung 31 entgegen. Solange der Gasdruck nicht größer wird als der Druck der Flüssigkeit an der achsfernen Umlenkstelle 32, kann also kein Gas von der axialen Zuführungsleitung 13 in den Kühlmittelraum 18 gelangen. Der Druck der Umlenkstelle 32 hängt dabei hauptsächlich vom radialen Abstand des Heliumspiegels in dem Kühlmittelraum 18 bezüglich der Drehachse 2 und vom Abstand der Umlenkstelle 32 von der Drehachse 2 ab. Wenn dieser Beispielsweise 0,4 m beträgt und groß gegenüber dem radialen Abstand des Heliumspiegels in dem Kühlmittelraum 18 ist, beträgt dieser Druck etwa $11 \cdot 10^5$ Pa bei einer Drehzahl des Läufers von 50 Umdrehungen pro Sekunde.

Bei dieser Kühleinrichtung werden somit vorteilhaft besondere Zu- oder Abführungskanäle zur Zu- bzw. Ableitung von Kühlmittel, das zur Kühlung eines oder mehrerer Dämpferschilde vorgesehen ist, vermieden, ohne daß eine Beeinträchtigung des Wicklungs-Kühlsystems bewirkt wird.

Der in der Figur angedeutete Läuferkörper 3 enthält ferner noch ein hohlzylindrisches, als Strahlungsschild wirkendes Bauteil 46, das sich zwischen dem Außenteil 10 des Läuferkörpers 3 und dessen den kalten Dämpferschild 35 umschließenden hohlzylindrischen Trägerkörperteil 25 befindet. Dieser Strahlungsschild 46 ist an seinen Stirnseiten mit den drehmomentübertragenden Verbindungsteilen 24 des Trägerkörperteils 25 mechanisch und thermisch verbunden.

In der Figur ist ferner eine achsnahe Kühlmittelabgasleitung 48 dargestellt, über die das Abgas aus dem Läufer herausgeführt wird, das zur Gegenstromkühlung des in der Figur nicht ausgeführten turbinenseitigen Endstückes des drehmomentübertragenden hohlzylindrischen Läuferkörperteils 25 dient.

## Patentansprüche

1. Einrichtung zur Kühlung einer supraleitenden Erregerwicklung (6) im Läufer (3) einer elektrischen Maschine, insbesondere eines Turbogenerators, mit mindestens einem Kühlmittelraum (18), der im Betriebszustand eine dampfförmige ($B_1$) und eine flüssige ($A_1$) Phase eines an einem Anschlußkopf in mindestens eine mit dem Kühlmittelraum verbundene, mitrotierende Zuführungsleitung (13) mit unterkritischem Druck eingeleiteten kryogenen Kühlmittels enthält, mit durch die Erregerwicklung verlaufenden Kühlmittelwegen, die mit dem von der flüssigen Phase ($A_1$) eingenommenen Flüssigkeitsraum des Kühlmittelraumes (18) verbunden sind, mit mindestens einer Kühlmittelabführungsleitung (48), die an den von der gasförmigen Phase ($B_1$) eingenommenen Dampfraum des Kühlmittelraumes (18) angeschlossen ist, und mit mindestens einer flüssiges Kühlmittel enthaltenden Kühlmittelvorratskammer (38) sowie mit mindestens einem weiteren, schleifenartig verlaufenden Kühlmittelweg (40, 36, 37, 41), der mit einem um die Erregerwicklung angeordneten Dämpferschild (35) thermisch verbunden und der an seinem Anfang und Ende an die Kühlmittelvorratskammer (38) angeschlossen ist, dadurch gekennzeichnet, daß die Kühlmittelvorratskammer (38) über eine radial verlaufende Verbindungsleitung (39) direkt an die Kühlmittelzuführungsleitung (13) angeschlossen ist und daß zu einer Abführung von gasförmigen Kühlmittelanteilen aus der Kühlmittelvorratskammer (38) zu dem Anschlußkopf hin der Strömungsquerschnitt der radial verlaufenden Verbindungsleitung (39) sowie der Strömungsquerschnitt zumindest des zwischen dem Anschlußkopf und der Anschlußstelle (43) der radialen Verbindungsleitung (39) verlaufenden Teilstückes (44) der Kühlmittelzuführungsleitung (13) entsprechend groß bemessen sind.

2. Kühleinrichtung nach Anspruch 1, dadurch gekennzeichnet, daß der Kühlmittelweg des Dämpferschildes (35) mindestens ein Paar paralleler, im wesentlichen axial verlaufender Kühlmittelleitungen (36, 37) umfaßt, die an der von der zugeordneten Vorratskammer (38) am weitesten entfernten Stelle (42) miteinander verbunden sind.

3. Kühleinrichtung nach Anspruch 2, dadurch gekennzeichnet, daß eine Kühlmittelleitung (36) jedes Leitungspaares radial weiter außen liegt, während die andere Kühlmittelleitung (37) radial weiter innen angeordnet ist.

4. Kühleinrichtung nach Anspruch 3, dadurch gekennzeichnet, daß die Mündungsstelle der weiter außen liegenden Kühlmittelleitung (36, 40) in der Kühlmittelvorratskammer (38) radial weiter außen liegt als die Mündungsstelle der weiter innen liegenden Kühlmittelleitung (37, 41).

5. Kühleinrichtung nach einem der Ansprüche 1 bis 4, gekennzeichnet durch eine Strömung des Kühlmittels in dem Kühlmittelweg des Dämpferschildes (35) aufgrund einer Thermosiphon-Wirkung.

6. Kühleinrichtung nach einem der Ansprüche 1 bis 5, dadurch gekennzeichnet, daß der zu kühlende Dämpferschild (35) von einem weiteren ungekühlten Dämpferschild (34) konzentrisch umgeben ist.

## Claims

1. Apparatus for cooling a superconducting excitation winding (6) in the rotor (3) of an electrical machine, in particular of a turbogenerator, having at least one coolant chamber (18) which in the operating state includes a vapour phase $(B_1)$ and a liquid phase $(A_1)$ of a cryogenic coolant which is introduced at a connection head into at least one supply line (13) rotating with and connected to the coolant chamber, at sub-critical pressure; coolant channels which run through the excitation winding and are connected to the liquid space of the coolant chamber (18) occupied by the liquid phase $(A_1)$; at least one coolant withdrawal line (48) connected to the vapour space of the coolant chamber (18) occupied by the gaseous phase $(B_1)$; at least one coolant supply chamber (38) which contains at least one liquid coolant; and at least one further coolant channel (40, 36, 37, 41) which runs in the form of a loop and is thermally connected to a damper shield (35) arranged around the excitation winding and which at its beginning and end is connected to the coolant supply chamber (38), characterised in that the coolant supply chamber (38) is directly connected to the coolant supply line (13) through a connecting line (39) which runs radially; and that, in order to withdraw amounts of gaseous coolant from the coolant supply chamber (38) to the connection head, the flow cross-section of the radial connecting line (39) and the flow cross-section of at least the part (44) of the coolant supply line (13) which extends between the connection head and the connection point (43) of the radial connecting line are so dimensioned as to be suitably large.

2. Cooling apparatus as claimed in Claim 1, characterised in that the coolant channel of the damper shield (35) comprises at least one pais of parallel coolant lines (36, 37) which run essentially axially and which are connected to one another at the point (42) furthest to the supply chamber (38) assigned thereto.

3. Cooling apparatus as claimed in Claim 2, characterised in that one coolant line (36) of each pair of lines is so located as to be radially further outwards, whilst the other coolant line (37) is arranged so as to be radially further inwards.

4. Cooling apparatus as claimed in Claim 3, characterised in that, in the coolant supply chamber (38), the outlet point of the coolant line (36, 40) located further outwards, is so arranged as the be radially further outwards than the outlet point of the coolant line (37, 41) located further inwards.

5. Cooling apparatus as claimed in one of Claims 1 to 4, characterised by a flow of coolant in the coolant channel of the damper shield (35) caused by a thermosiphon effect.

6. Cooling apparatus as claimed in one of Claims 1 to 5, characterised in that the damper shield (35) to/be cooled is concentrically surrounded by a further damper shield (34) which/is not cooled.

## Revendications

1. Dispositif de refroidissement d'un enroulement d'excitation (6) supraconducteur d'un rotor (3) d'une machine électrique, notamment d'un turboalternateur, comprenant au moins une chambre (18) pour un agent réfrigérant, qui, en l'état de fonctionnement, contient une phase vapeur $(B_1)$ et une phase liquide $(A_1)$ d'un agent réfrigérant cryogénique introduit, sous une pression sous-critique, par une tête de raccordement dans au moins un conduit d'amenée (13) entraîné en rotation avec le rotor et communiquant avec la chambre (18) pour l'agent réfrigérant, des trajets pour l'agent réfrigérant traversant l'enroulement d'excitation et communiquant avec l'espace pris par la phase liquide $(A_1)$ dans la chambre (18) pour l'agent réfrigérant, au moins un conduit d'évacuation de l'agent réfrigérant (48), qui est raccordé à l'espace pris par la phase gazeuse $(B_1)$ dans la chambre (18) pour l'agent réfrigérant (18), et au moins un réservoir pour l'agent réfrigérant (38) contenant un agent réfrigérant liquide, ainsi qu'au moins un autre trajet pour l'agent réfrigérant (40, 36, 37, 41) s'étendant en forme de boucle, qui est relié thermiquement à un écran amortisseur (35) disposé autour de l'enroulement d'excitation et dont le commencement et la fin sont raccordés au réservoir pour l'agent réfrigérant (38), caractérisé en ce que le réservoir pour l'agent réfrigérant (38) est raccordé directement, par l'intermédiaire d'un conduit de mise en communication (39) s'étendant radialement, au conduit d'amenée de l'agent réfrigérant (13) et en ce que, pour une évacuation des parties gazeuses de l'agent réfrigérant du réservoir pour l'agent réfrigérant (38) vers la tête de raccordement, la section droite d'écoulement du conduit de mise en communication (39) s'étendant radialement ainsi que la section droite d'écoulement d'au moins le tronçon (44) du conduit d'amenée de l'agent réfrigérant (13) compris entre la tête de raccordement et l'emplacement de raccordement (43) du conduit de mise en communication (39) ont des grandes dimensions correspondantes.

2. Dispositif de refroidissement suivant la revendication 1, caractérisé en ce que le trajet pour l'agent réfrigérant de l'écran amortisseur (35) comprend au moins un couple de Conduits parallèles, s'étendant sensiblement axialement, pour l'agent réfrigérant (36, 37) qui communiquent l'un avec l'autre à l'emplacement (42) le plus éloigné du réservoir (38) associé.

3. Dispositif de refroidissement suivant la revendication 2, caractérisé en ce que l'un des conduits pour l'agent réfrigérant (36) de chaque couple de conduits se trouve davantage vers l'extérieur, suivant la direction radiale, tandis que l'autre conduit pour l'agent réfrigérant (37) est disposé davantage vers l'intérieur, suivant la direction radiale.

4. Dispositif de refroidissement suivant la revendication 3, caractérisé en ce que l'emplacement où le conduit pour l'agent réfrigérant se trouvant davantage vers l'extérieur (36, 40) débouche dans le réservoir pour l'agent réfrigérant (38) est plus à l'extérieur, suivant la direction radiale, que l'emplacement où débouche l'autre conduit pour l'agent réfrigérant (37, 41) se trouvant davantage vers l'intérieur.

5. Dispositif de refroidissement suivant l'une des revendications 1 à 4, caractérisé par un écoulement de l'agent réfrigérant dans le trajet pour l'agent réfrigérant de l'écran amortisseur (35), en raison d'un effet de thermosiphon.

6. Dispositif de refroidissement suivant l'une des revendications 1 à 5, caractérisé en ce que l'écran amortisseur (35) à refroidir est entouré concentriquement par un autre écran amortisseur (34) qui n'est pas refroidi.

0 040 734

16 42 34 10 26 46 35 7 36 37 25 8 28 9

24

22

3

32

17

31 30

5

40

38

11

B2

18 4 18 A1 6 41 23 18 39

B1

13

2 20 19 A B 15 13 14 43 48 44

6

80 P 7532